# EUROPEAN PATENT APPLICATION

(11) **EP 4 730 450 A1**
(43) Date of publication of application: **22.04.2026**
(21) Application number: 25207745.8
(22) Date of filing: 09.10.2025
(51) Int. Cl.: H01M 8/124, H01M 8/1286, H01M 8/2428, B23K 26/36

(54) **METHOD FOR MANUFACTURING A FUEL CELL STRUCTURE**

(30) Priority: 16.10.2024 DE 102024130043
(71) Applicant: Airbus S.A.S., 31700 Blagnac (FR)
(72) Inventor: Rohr, Oliver, 85521 Ottobrunn (DE); Friedberger, Alois, 85521 Ottobrunn (DE)
(74) Representative: OTN Airbus SAS

(57) **Abstract**

A method (200) for manufacturing a fuel cell structure (100) is provided. The method (200) comprises providing (210) a continuous support layer (110) with a first and second side (111, 112), depositing (220) a continuous first electrode layer (120) of a first electrode material (121) onto the first side (111), removing (230) portions (124) of the first electrode layer (120), leaving individual sections (122, 123) side-by-side, depositing (240) a continuous electrolyte layer (140) above the first electrode layer (120), removing (250) portions (144) of the electrolyte layer (140) coincident with the removed first electrode sections (122, 123), depositing (260) a continuous second electrode layer (130), removing (270) portions (134) of the second electrode layer (130) coincident with the removed sections of the previous layers (120, 140), and depositing (280) an electrically conductive material (150) within the created cavities, electrically interconnecting in series adjacent sections of the first and second electrode layers (120, 130) via the conductive material (150).

## Description

### TECHNICAL FIELD

The present disclosure relates to method for manufacturing fuel cell structures in general, and in particular to a method for manufacturing fuel cell structure comprising multiple fuel cells that are supported by a common support layer and connected in series with each other.

### TECHNICAL BACKGROUND

Because of the technical progress, and because of their environmentally friendly creation of electrical energy, fuel cells are becoming increasingly popular as alternative energy sources. However, planar solid oxide fuel cells (SOFCs), for example, offer a relatively low gravimetric power density and are as such currently mainly developed for stationary applications. In mobile applications, and for aircrafts in particular, reduction of weight is of paramount importance. Therefore, in order to keep the weight low while still providing the necessary power, increasing the gravimetric power density (being the power per weight unit) is desired.

In typical planar SOFCs having an oxide conducting ceramic electrolyte covered with a negative electrode (anode) on the fuel side and with a positive electrode (cathode) on the oxidizer side, metallic interconnectors at the outsides of each cell are used to electrically connect each cell to a neighboring cell and to separate the fuel from the oxidizer channel (air gas channel) of two neighboring cells, in order to build a fuel cell stack. The electrical current thereby is transferred in a perpendicular direction of the cell area. The interconnectors can take up to 70% of the total weight of such a planar stack.

Although known tubular cell designs, for example, do not rely on such heavy interconnectors and therefore offer optimization potential with regard to the gravimetric power density, such solutions implement current collection in the longitudinal or circular direction and along the in-plane cross section of the cell. This current collection mechanism causes higher current losses compared to planar concepts (partly because of the long distances the electrons have to travel) and with this low gravimetric power densities.

Also, integrated planar SOFC concepts are known in the art, in which single cell strips are arranged in a common plane onto a porous support substrate and interconnected in series by electrical interconnectors. Such solutions offer advantages with regard to the gravimetric power density because heavy interconnector plates can be avoided. However, in particular the manufacturing of tubular structures having such a networking concept can be difficult.

### DESCRIPTION

It is an objective to provide a simple method for manufacturing an integrated fuel cell structure that increases manufacturing precision, is cost efficient, leads to low mechanical degradation and increases lifetime of the fuel cell structure, and that is highly reproducible.

This objective is solved by the subject matter of the independent claims. Further embodiments are described in the dependent claims as well as in the following description.

According to a first aspect, a method for manufacturing a fuel cell structure is provided. The method comprises providing a support layer having a first side and a second side. The method further comprises depositing a first electrode layer comprising a first electrode material onto the first side of the continuous support layer, wherein the first electrode layer is a continuous layer, and removing portions of the first electrode layer, such that at least two individual sections of the first electrode layer remain on the first side of the support layer, and such that the individual sections are neighboring each other side-by-side on the support layer. Further, the method comprises depositing a continuous electrolyte layer comprising an electrolyte material above the first electrode layer and removing portions of the electrolyte layer that are at least partially coincident with the portions removed from the first electrode layer, such that each one of individual section of the electrolyte layer covers one of the individual section of the first electrode layer. The method also comprises depositing a second electrode layer comprising a second electrode material onto the electrolyte layer, wherein the second electrode layer is a continuous layer, and removing portions of the second electrode layer that are at least partially coincident with the portions removed from the first electrode layer and the electrolyte layer, such that each one of individual sections of the second electrode layer covers one of the individual sections of the electrolyte layer. The method also comprises depositing an electrically conductive material at least partially within at least one cavity created by removing the portions of the first electrode layer, the electrolyte layer, and the second electrode layer, such that one of the individual sections of the first electrode layer is electrically interconnected with an adjacent one of the individual sections of the second electrode layer via the electrically conductive material.

The method enables manufacturing multiple fuel cells in a networking configuration onto a single and continuous support layer which provides the mechanical support for the fuel cells. The continuous support layer builds a first layer of the fuel cell structure. The individual electrodes (i.e., the anodes and cathodes) of individual fuel cells are arranged side-by-side on the support layer and are interconnected with each other via the conductive material passing through the electrolyte layer (which is interposed between the first and second electrode layer, i.e., between the anode layer and cathode layer) in a serial connection. In particular, the single fuel cell segments are not stacked on top of each other, like multiple cells of, e.g., a planar fuel cell stack, but are rather arranged side-by-side with each other in a common plane. Therefore, the heavy-weight bipolar plates between the single fuel cells in a regular fuel cell stack can be omitted, thereby reducing weight of the structure.

The support layer in particular may be a continuous or coherent layer. The term continuous layer, as used herein, generally means that every point on the corresponding layer (i.e., the support layer, the first electrode layer, the electrolyte layer, the second electrode layer, and (where applicable) the barrier layer, as described further below) is in some way connected to every other point on the same layer. In other words, there is no position on the corresponding layer that completely separates a first section of the layer from a second section of the layer.

The layers itself therefore may not necessarily have an even surface. For example, when the first and second electrode layers and the electrolyte layer are added (prior to removal of the corresponding portions in the corresponding steps described below) these layers may be uneven in these portions because the previous layers already have been removed. In general, it should be appreciated that the electrode layers and the electrolyte layer are only continuous in this sense after depositing/coating them onto the previous layer and prior to removing the corresponding portions of the corresponding layers, as described herein. After removing the corresponding portions, these layer are no longer continuous in the above sense but rather build multiple individual but adjacent sections.

The fuel cell structure manufactured by the disclosed method may, for example, be a solid oxide fuel cell (SOFC). However, any other suitable types of fuel cells are also conceivable.

The disclosed method allows for a precise, low cost, and highly reproducible manufacturing of such fuel cell structures that further improves mechanical stability and reduces the mechanical degradation, leading to increased lifetime of the fuel cell structure. Further, in particular in the preferred embodiments having a tubular shape and that comprise removing the corresponding portions by means of laser ablation, as described below, because all of the electrode layers and the electrolyte layer (as well as an optional barrier layer) are arranged on an outer side of the tube, problems which may occur when laser ablating portions of layers arranged in an inner side of such a tube are avoided because such layer are not necessary. The inner side of the tube is purely built by the support layer.

The method starts with providing the support layer, which may, for example, be a metallic or ceramic element. In principle, any shape of the support layer is conceivable, such as flat shapes, tubular shapes, gyroid structures, etc. Gyroid structure have the advantage that not a large number of tubes need to be assembled to build a high power fuel cell system. Instead, only a few complex gyroid structures can be sufficient. However, in a preferred embodiment, the continuous support layer is a tubular structure. The support layer serves to provide mechanical stability to the whole fuel cell structure and may, for example, be made from aluminum, a ceramic material or any other suitable material. The support layer may, for example, be produced using a CIM (ceramic injection molding) process, MIM (metal injection molding) process, an extrusion process, or any other suitable process known or not known in the art. In particular, in tubular shapes of the fuel cell structure, the interior of the tube may act as a fuel or oxidizer channel. Therefore, the support layer may have a porous material at least in distinct areas associated with individual fuel cells in the finished fuel cell structure, so that either a fuel gas or an oxidizer gas can permeate through the support layer to the corresponding electrode, depending on the configuration.

The support layer, in general, has a first side and a second side. In tubular shapes, these sides may correspond to the outer side and the inner side of a hollow tube where the support material fully encloses a tubular (i.e., cylindrical) cavity along a circumference of the tube.

After providing the continuous support layer, the method comprises depositing (such as coating) a first electrode material onto the first side of the support structure, such that the first side is at least partially covered with the first electrode material, which therefore builds a continuous first electrode layer (i.e., an anode layer or a cathode layer, depending on the configuration) covering the first side of the support layer.

That the first electrode material "at least partially" covers the first side of the support layer means that the first electrode layer does not necessarily have to cover the whole surface of the corresponding side. For example, it is conceivable that a side portion of the support layer is not covered. However, in any case, the first electrode layer is continuous in the same way as the support layer. Preferably, however, the whole surface of the first side of the support layer is covered by the first electrode material after the depositing step of the first electrode layer. The depositing step of the first electrode layer (as well as any other layer, as described further below) may, for example, be done using a slurry dip coating process, a spray coating process, or any other suitable process. In order to ensure that only parts of the support layer that are to be coated by the corresponding electrode material (anode material or cathode material) are coated, parts/sections of the electrolyte layer, at which the corresponding electrode material shall not be deposited may be masked with a masking material that either prevents that the anode material attaches to the electrolyte layer at this parts/sections in the first place or that can be easily removed from them afterwards together with the corresponding electrode material, for example by a certain chemical process. In particular, the second side may be masked to avoid depositing the anode material onto the second side.

After depositing the first electrode layer onto the first side, portions of the first electrode layer are removed by any suitable way, preferably by laser ablation. This process herein also is referred to as "segmentation". In particular, the first electrode layer is segmented, such that at least two individual sections remain on the first side of the support layer, while portions between these at least two individual sections are removed. In other words, the first electrode layer is interrupted, such that at least two individual sections emerge that are neighboring (i.e., are adjacent) each other on the first side of the support layer but that are not in contact with each other by removing corresponding portions of the first electrode material, for example, in lines. In tubular structures, as described herein below, these lines may, in particular be rings around a circumferential directions of the tube. Therefore, the removed portions of the first electrode layer (as well as of the electrolyte layer, the second electrode layer, and (if applicable) a barrier layer or any other layers) also is referred to as "segmentation rings" herein. In particular this segmentation may be achieved by laser ablation. The removal of the portions of the first electrode layer may occur either before or after sintering the previous structure, i.e., the support layer covered by the uninterrupted first electrode layer, if such sintering is done.

After removing the portions of the first electrode layer, a continuous electrolyte layer is deposited on top of the first electrolyte layer. The electrolyte layer thereby is deposited onto the first electrode layer, such that it covers the whole first electrode layer, i.e., the remaining individual sections of the first electrode layer as well as the locations, where the first electrode layer has been removed. It is in particular important to ensure that the individual sections of the first electrode layer are at least substantially covered by the electrolyte layer, so that each of these sections later on builds an individual fuel cell. Depositing the electrolyte layer onto the first electrode layer may occur similarly to depositing the first electrode layer, including the masking, if necessary. Therefore, the above discussion of depositing the first electrode layer regarding the described processes is equally valid for the depositing of the electrolyte layer.

After depositing the electrolyte layer, the electrolyte layer is partially removed, i.e., segmented, in the same way, as has been done with the first electrode layer. In particular, the segmentation of the electrolyte layer occurs, such that each individual section of the first electrode layer is covered by a corresponding individual section of the electrolyte layer. In other words, the electrolyte material of the electrolyte material is removed in substantially the same in-plane locations as has been done with the first electrode layer.

Then, a second (continuous) electrode layer is deposited in the same way onto the segmented electrolyte layer, as the unsegmented electrolyte layer has been deposited onto the first electrode layer, including the masking, if necessary. If a barrier layer is to be present between the electrolyte layer and the second electrode layer, this barrier layer may be deposited together with the second electrode layer and may be segmented together with the second electrode layer. However, such a barrier layer may also be deposited and segmented in the same way separately from the second electrode layer before depositing the second electrode layer. Further, such a barrier layer may, additionally or alternatively, also be added in the same way between the first electrode layer and the electrolyte layer. The above discussion with regard to the first electrode layer and the electrolyte layer regarding the corresponding processes is equally valid for the second electrode layer (and a barrier layer) and will not be repeated.

After depositing the second electrode layer (and possibly a barrier layer), the second electrode layer is segmented in the same way as the first electrode layer. In particular, the portions (segmentation lines or rings) that are removed from the second electrode layer are at least substantially coincident with the portions removed from the first electrode layer. However, the locations of the segmentation lines or rings of the second electrode layer may also be slightly shifted from the corresponding portions of the first electrode layer in order to provide an insulation space between individual sections of the second electrode layer, which facilitates an electrical in-plane insulation between individual sections of the second electrode layer when the electrically conductive material is added in the next step of the method.

The individual sections of each of the first electrode layer, the electrolyte layer, the second electrode layer, and (if applicable) barrier layer each together build individual fuel cells that are arranged side-by-side on the support layer. Further, the at least partially coincident removed portions of each of the first electrode layer, the electrolyte layer, the second electrode layer, and the barrier layer (if applicable) together build a cavity. This cavity is used to electrically interconnect each individual section of the first electrode layer with an adjacent one of the individual sections of the second electrode layer. This leads to an in-plane serial connection between the individual fuel cells. In particular, an electrically conductive material is deposited within each of these cavities, so that this connection scheme is achieved. This may, for example, be done by depositing the electrically conductive material via a galvanic deposition method or a physical vapor deposition method (PVD method) within the cavities. Optionally, a masking material may be added in the cavities first, in order to exactly define, where the electrically conductive material should attach to the corresponding layers. The electrically conductive material may be present along the whole segmentation lines/rings, or only partially. Also, alternatively, depositing the electrically conductive material may occur bevor depositing and partially removing the second electrode layer. The individual sections of the second electrode layer may then by formed such that they partially overlap the electrically conductive material on one side, i.e., at one of two segmentation rings limiting the corresponding individual section.

In particular, in the disclosed method, portions of the first electrode layer, the electrolyte layer, and the second electrode layer are removed by laser ablation in regions of these layers, such that the remaining sections of the layers are substantially coincident with each other on the first side of the support layer. In this way, a first individual section of the first electrode layer and a first individual section of the second electrode layer together with the intermediate part of the electrolyte layer build a first fuel cell, and second individual section of the first electrode layer together with a second individual section of the second electrode layer and the intermediate part of the electrolyte layer build a second fuel cell, and so on. These individual fuel cells are connected in series by the electrically conductive material. Any number of such individual fuel cells can be built by providing the segmentation rings and electrical interconnections accordingly. For current collection from the overall fuel cell structure, the first individual section of the first electrode layer and the last individual section of the second electrode layer can be contacted or vice versa.

One of the first electrode material and the second electrode material in particular is an anode material and the other one of the first electrode material and the second electrode material is a cathode material. For example, an anode material may be or comprise NiO-8YSZ (a composite material consisting of nickel oxide (NiO) and 8 mol-% yttria-stabilized zirconia (8YSZ)). A cathode material may, for example, be or comprise LSC (Lanthanum Strontium Cobaltite, such as La_{0.6}Sr_{0.4}CoO₃). However, other materials are conceivable and possible, too.

The conductive material may, e.g., be a metal material such as platinum with a high degree of gas tightness, Nickel (Ni), Crofer, or LSC. Crofer is a type of high-temperature ferritic steel specifically designed for use in solid oxide fuel cells (SOFCs) and similar high-temperature electrochemical systems. Its key feature is a high resistance to oxidation and corrosion at elevated temperatures, making it suitable for environments where such conditions are prevalent. Crofer is primarily a ferritic stainless steel, which means it contains iron and chromium as the main elements. It may include small amounts of other alloying elements such as titanium, manganese, and silicon to enhance its performance.

According to an embodiment, the method further comprises depositing a barrier layer between the electrolyte layer and at least one of the first electrode layer and the second electrode layer, and removing portions of the barrier layer that are at least partially coincident with the portions removed from the first electrode layer, the electrolyte layer, and the second electrode layer.

Such a barrier layer may be produced similar to the electrode layers and the electrolyte layer. The barrier layer may, for example, be a layer consisting of GDC (gadolinium doped cerium) and may have a thickness of, e.g., 5 to 10 µm.

According to another embodiment, providing the continuous support layer comprises providing the continuous support layer in a tubular shape building a tube having an outer side and an inner side, wherein the first side of the continuous support layer is the outer side of the tube and wherein the second side of the continuous support layer is the inner side of the tube.

Such a tube may, for example, have an inner diameter between 1 mm to 20 mm, preferably between 3 mm to 15 mm, and most preferably between 5 mm to 10 mm. The tube length may be in the range of 30 mm to 80 mm, preferably between 40 mm to 70 mm, and most preferably between 50 mm to 60 mm. The tube may have a wall thickness in one of the following ranges: between 150 µm to 600 µm, between 200 µm to 550 µm, or between 250 µm to 500 µm. Preferably, the wall thickness is 200 µm. However, these dimensions are only exemplary in nature and any other suitable dimensions may be used.

Using a tubular shape for the support layer leads to a tubular fuel cell structure, because the first electrode layer (anode or cathode layer) and the second electrolyte layer (cathode or anode layer, depending on the first electrode layer) are coated/deposited onto the outer side of the tube in a layered structure. The inner side of the tube may, for example, be used as a fuel channel to provide fuel such as hydrogen to the fuel cell structure and the outer side of the tube may be used to provide an oxidizer such as oxygen to the fuel cell structure. However, depending on the arrangement of the anode layer (first or second electrode layer) and the cathode layer (second or first electrode layer) in the layered structure on the outer side of the tube, the inner side may also be used to provide the oxidizer, and the outer side may be used to provide the fuel.

The tubular shape is in particular preferred because it increases the gravimetric power density.

According to another embodiment, removing the corresponding portions of the first electrode layer, the electrolyte layer, and the second electrode layer each occurs in at least one segmentation ring around a circumferential direction of the tube, such that the segmentation rings are each at least partially coinciding with each other in their position along a longitudinal direction of the tube. In particular, the segmentation rings each run perpendicular to the longitudinal direction of the tube and are spaces in the longitudinal direction. This arrangement has already been described above.

According to another embodiment, the continuous support layer is at least partially porous, such that it is permeable for a fuel or an oxidizer supplied to the fuel cell structure, depending on the configuration of the first and second electrode layers.

In general, a fuel cell needs a fuel such as hydrogen and an oxidizer such as oxygen. The anode of a fuel cell needs to be in contact with the fuel and the cathode needs to be in contact with the oxidizer, as will be readily apparent. Therefore, in particular, if the first electrode layer is an anode layer and the second electrode layer is a cathode layer, the support layer is at least partially permeably for fuel such as hydrogen. On the other hand, if the first electrode layer is a cathode layer and the second electrode layer is an anode layer, the support layer is at least partially permeable for an oxidizer, such as oxygen or air gas. Such a partially porous support layer may, for example, be manufactured by 3D printing of ceramic of metallic materials, such as Al₂O₃, or from metallic foams or from ceramic materials including pore formers. Other possibilities are powder metallurgically produced metals or laser drilling. However, this enumeration is only exemplary in nature.

According to another embodiment, the support layer comprises a ceramic or metallic material. Further, the support layer is porous at least in regions below the first electrode layer, such that the fuel or the oxidizer can permeate the support layer from the second side to the first side of the support layer.

In particular, the regions below the first electrode layer, in which the support layer is porous, correspond to regions below each one of the individual sections of the first electrode layer, which therefore correspond to regions of the support layer, above which the individual fuel cells are present. This enables each of the individual fuel cells to receive either fuel or an oxidizer, depending on the configuration, from the second side of the support layer, which, in particular, in tubular structures, corresponds to the inner side of the tube.

According to another embodiment, removing the corresponding portions of the first electrode layer, the electrolyte layer and the second electrode layer is done by a laser ablation process.

Laser ablation is a process where a high-powered laser is used to remove material from a solid surface by irradiating it. The intense energy from the laser heats and vaporizes the material (i.e., the anode and cathode material at the locations, where the laser impinges upon these materials), effectively removing layers of it in a highly controlled manner. The laser beam, which can be in short pulses or continuous, is focused onto a small spot on the surface of the material. The laser beam or individual pulses exhibit a very high energy density, such that a lot of energy is concentrated on a very small area. The surface absorbs the energy from the laser. Depending on the material and the laser wavelength, the energy can penetrate to different depths, but usually it only affects the surface. In order to ablate thicker material depths as well as greater material in-plane widths, the laser can scan (i.e., move over) the region of the layer which is to be removed. The absorbed energy causes the material (i.e., the anode material and cathode material) to heat up rapidly. As a result, the material either melts, directly vaporizes, or is transformed into a plasma, which consists of ionized atoms and molecules. As the material heats up and turns into vapor or plasma, it is ejected from the surface, effectively removing a thin layer of material. This process can be highly precise, making laser ablation ideal for microfabrication or selective material removal.

Laser intensity, pulse duration (where applicable), illumination angel, an any other laser parameters are chosen, such that the corresponding portions of the first electrode layer, the electrolyte layer and the second electrode layer are completely removed without substantially removing or damaging the support layer at these locations. In general, these parameters depend on the materials used for the layers as well as on their dimensioning and other paraments and need to be chosen according to the concrete application. Only as non-limiting examples, femtosecond and picosecond lasers can be used for precision ablation since they minimize thermal damage and help protect the underlying support layer. Nanosecond lasers can also be used but may induce more heat and thus thermal effects. Suitable wavelengths may, for example, include 532 nm (green) and 1064 nm (infrared) in Nd lasers. 355 nm UV lasers can be used for higher material absorption and finer ablation precision. Femtosecond lasers typically have a pulse duration of 10-300 fs. Picosecond lasers use pulse durations between 1-10 ps. Pulse durations of nanosecond lasers range from 1-100 ns. The pulse energy is usually between 10 µJ to 1 mJ, depending on the material and ablation depth. Suitable laser powers could range between 1 W to 50 W for pulsed lasers, if used (continuous lasers could be suitable, too). High repetition rates between 10 kHz to 500 kHz ensure consistent material removal and smooth ablation. The ablation depth typically ranges from a few micrometers per pulse, varying with material thickness. The focus of the laser beam can, for example, be between 10-120 µm, providing precision for fine feature ablation. The laser beam can, for example, scan the material at speeds between 100 mm/s to 2000 mm/s, depending on the speed/precision required. These parameters are only exemplary and need to be customized based on the material being ablated. The goal is to ablate the portions of the layers without damaging the support layer.

According to another embodiment, each laser ablation process is stopped as soon as the support layer is exposed, in order to at least largely avoid removal of material of the support layer.

Since the support layer acts as a mechanical support of the whole fuel cell structure, weakening the mechanical strength is to be avoided. If the laser ablation processes are not stopped soon enough, parts of the support layer would be removed, decreasing the thickness of the support layer at the corresponding location and possibly introducing mechanical weak point due to edges. Therefore, the laser ablation process is stopped as soon as the support layer is exposed, i.e., is no longer covered by any other material. For this, the corresponding surface may, for example, be visually observed (either by the naked eye or via a camera arrangement or by any other suitable means). As soon as the support layer or identifiable features of the support layer becomes visible at the corresponding location, laser ablation is stopped.

According to another embodiment, each laser ablation process is performed for a predetermined period of time.

In particular, laser ablation is stopped after a predetermined period of time has lapsed which is known to be suitable to fully ablate the corresponding covering material while at least substantially leaving the material of the support layer unablated. Such a predetermined period of time may, for example, be determined depending on at least one of the layer thickness of the corresponding layer currently ablated (first electrode layer, electrolyte layer, second electrode layer), the materials of these layers and their properties in response to laser radiation, and the laser settings (power, intensity, etc.) and other possible characteristics influencing the necessary irradiation time for complete laser ablation of the corresponding layers at the corresponding locations without removing parts of the support layer. The predetermined period of time may, for example, be determined by a physical model of the corresponding layer structure or may be based on prior runs of the procedure (or by using test or model fuel cell structures) and inspection of the result. However, the necessary time for laser ablation may also be determined by any other suitable means and may, for example, also be determined using machine learning or artificial intelligence methods based on prior training data that is used for training a corresponding neural network. Although the laser ablation should ideally stop at exactly the moment when all of the desired parts of the corresponding layers are removed without removing any of the support layer, a small amount, such as a few percent, of the support layer thickness may optionally also be allowed to be removed during the laser ablation processes.

According to another embodiment, the support layer with regard to the corresponding one of the first electrode layer, the electrolyte layer, and the second electrode layer exhibits a distinct emission spectrum. Removing of the portions of at least one of the first electrode layer, the electrolyte layer and the second electrode layer, respectively, further comprises monitoring the corresponding emission spectrum during the corresponding laser ablation process and stopping the corresponding laser ablation process when a change in the detected emission spectrum indicates the corresponding laser ablation process has reached the support layer and therefore is complete.

**In** general, every material comprises certain absorption, transmission and reflection properties for electromagnetic waves, such as light. By using a material of the support layer having a distinct emission spectrum from each of the used electrode materials and the electrolyte materials, these properties may be utilized to detect, when the corresponding portions of the corresponding layer have been fully removed. For example, if the first electrode material and the material of the support layer comprise different reflection properties, the reflection of the laser light from these materials is different from each other. Hence, when the corresponding portions to be removed have been completely removed by laser ablation, such that the support layer is no longer covered by the first electrode layer at the desired portions, a detected light emission changes. The same holds for the other, subsequently added layers (electrolyte layer, second electrode layer), since each of these layers is ablated down to the support layer in at least partially coinciding locations. Further, optionally each of the support layer, the first electrode layer, the electrolyte layer and the second electrode layer may comprise a distinct emission spectrum from each other. This further allows to precisely ablate the layers in overlapping regions, where not all layer are fully ablated down to the support layer. A corresponding sensor, such as a CCD sensor or any other suitable optical sensor, may be used to detect the corresponding changes in the emission spectra and therefore to detect, when to stop the individual laser ablation processes, so that the support layer ideally is not ablated at all. Any positioning of the optical sensor is possible, as long as the sensor can detect the emission spectra in each laser ablation process.

Alternatively (or additionally) additives in low quantity may be added (doped) to the corresponding materials of the layers with the aim of the additives showing strong and characteristic emission spectra. This can significantly improve the endpoint detection for the laser ablation of the corresponding portions of the corresponding layers.

The endpoint detection based on emission spectra may optionally be combined with the time based approach for the laser ablation described further above.

According to another embodiment, removing the portions of the first electrode layer, the electrolyte layer, and the second electrode layer by laser ablation is performed by scanning corresponding regions of the respective one of the first electrode layer, the electrolyte layer, and the second electrode layer with a laser beam.

Scanning thereby means that the laser beam is moved/swept over the corresponding portions of the corresponding layers to be ablated, for example in predetermined paths (such as line by line), until the corresponding portions are completely removed by the laser beam.

According to another embodiment, the laser ablation processes are adjusted so as to soften edges at the end of each of the laser ablation processes, in order to avoid or at least reduce mechanical stress in the support layer.

In general, although stopping at exactly the interface between the support layer and the corresponding one of the first electrode layer, the electrolyte layer, and the second electrode layer in each laser ablation process would be ideal for the laser ablation, in reality, this cannot always be perfectly ensured. Rather, usually at least some of the material of the support layer may also be removed at the end of each laser ablation process. Since steep edges in any material are weak points reducing mechanical strength. Therefore, it may be desirable to avoid such steep edges which would reduce mechanical stability of the electrolyte layer.

In general, the portions (i.e., "segmentation rings") to be removed by laser ablation from the electrode layers and the electrolyte layer have a width considerably larger than the laser diameter. Softening the edges can then, for example, be achieved by using a "wobbling" laser beam and illuminating the edges with the laser beam for a shorter period of time than the center sections of the segmentation rings. This leads to deeper removal of material in the center sections than at the edges, thereby creating a more continuous transition at the edges. This reduces the risk of potential weak points that decrease mechanical stability. The laser may, during a first time interval of each laser ablation process in which the outer parts are removed (i.e., parts of the corresponding layer that is currently ablated that are further away from the support layer), uniformly illuminate the whole width of the corresponding portion to be removed. In a second time interval when reaching the end of the corresponding laser ablation process of the corresponding portion of the corresponding layer to be removed, illumination may be transitioned to the scheme described above, i.e., illuminating the edges with the wobbling laser for shorter time periods.

According to another embodiment, depositing the electrically conductive material is done by a galvanic process and/or a physical vapor deposition process (PVD process).

According to another embodiment, coinciding ones of the individual sections of the first electrode layer, the electrolyte layer, and the second electrode layer each together build an individual fuel cell. Each individual fuel cell is interconnected in series with an adjacent one of the individual fuel cells by the electrically conductive material.

According to another embodiment, depositing the first electrode layer, the electrolyte layer, and the second electrode layer is carried out by slurry dip coating or a spray coating process.

Slurry dip coating is a process where an object (here the electrolyte layer) is dipped into a slurry mixture, which consists of solid particles suspended in a liquid medium, and then withdrawn, allowing a thin layer of the slurry to coat the surface of the object. A mixture of fine solid particles (such as ceramic powders or metals, here the anode material and the cathode material, i.e., the first electrode material and the second electrode material) is suspended in a liquid, typically water or an organic solvent. Binders and additives may be included to ensure uniform coating and adhesion. The resulting structure before the current depositing/coating step is then immersed into the slurry for a certain amount of time, allowing the liquid to flow around the surface and coat it uniformly. After dipping, the fuel cell structure is withdrawn at a controlled speed, leaving a layer of the slurry on its surface. The thickness of this coating can be controlled by factors such as withdrawal speed, slurry viscosity, and solids concentration. The coated fuel cell structure layer is then dried to remove the liquid, leaving behind a solid layer of particles. If needed, the fuel cell structure can also be heated (fired or sintered) to bind the particles together and form a solid, uniform coating.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig.** 1: a schematic view of a tubular support layer of a tubular fuel cell structure, obtainable with the disclosed method.
- **Fig. 2**: a schematic cut view of a fuel cell structure showing a first, a second and a third fuel cell segment connected in series, obtainable with the disclosed method.
- **Fig. 3**: a schematic cut view of a wall structure of a fuel cell structure in multiple stages during the disclosed method.
- **Fig. 4**: a schematic cut view of an alternative wall structure of a fuel cell structure in multiple stages during the disclosed method.
- **Fig. 5**: a schematic view of an ideal situation, in which laser ablation of portions of one of the layers is perfectly timed to fully remove the portion while avoiding removing material of the underlying support layer.
- **Fig.** 6: a schematic view of a more realistic situation of laser ablation, in which some material of the support layer is removed, too, leading to sharp edges and therefore weak points in the support layer.
- **Fig. 7**: a schematic view of a solution of the problem shown in Fig. 6.
- **Fig. 8**: a flowchart of a method for manufacturing a fuel cell structure.

### DETAILLED DESCRIPTION

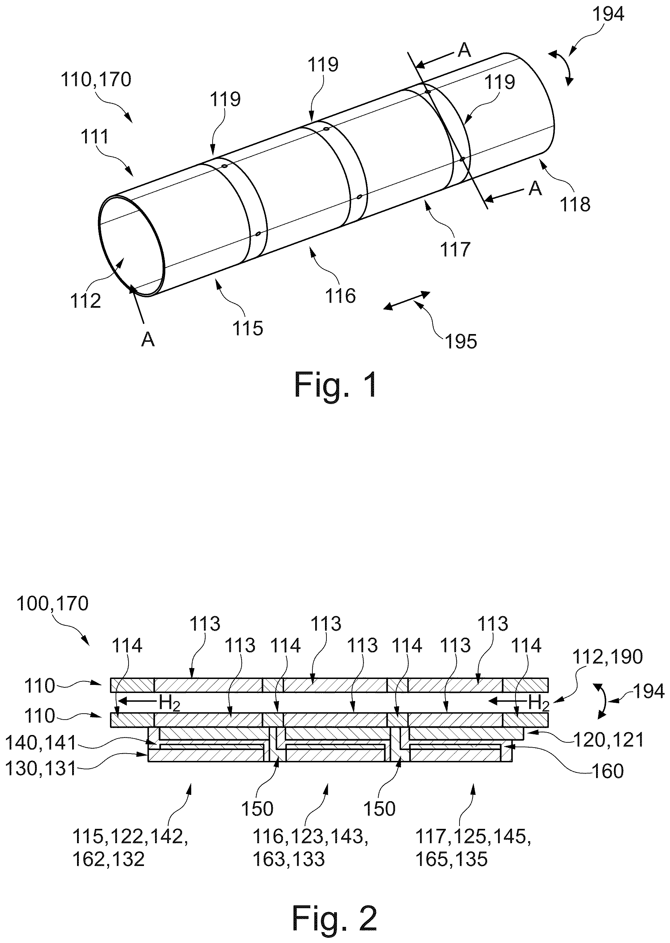

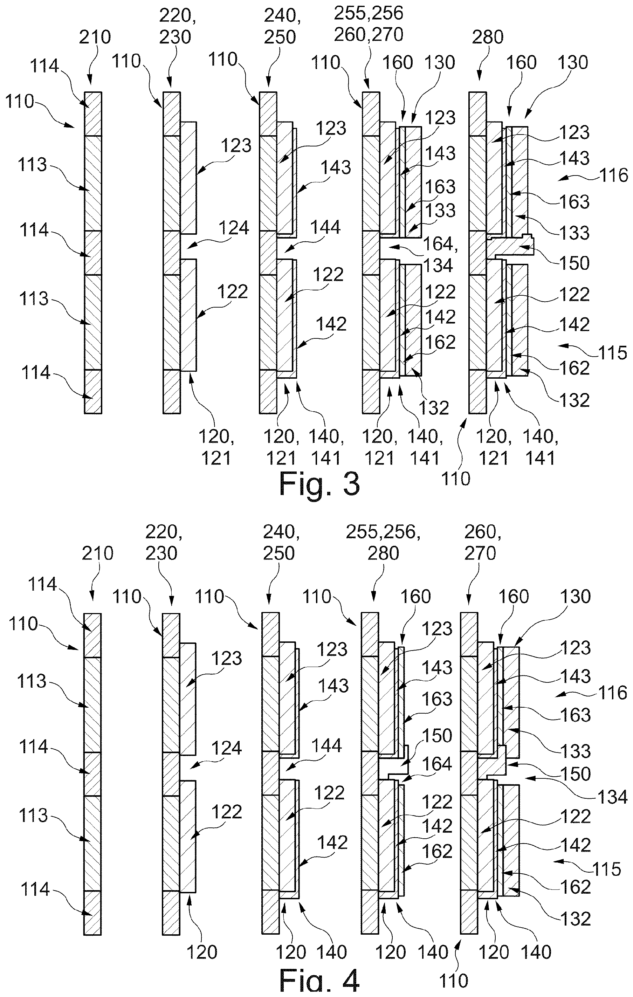

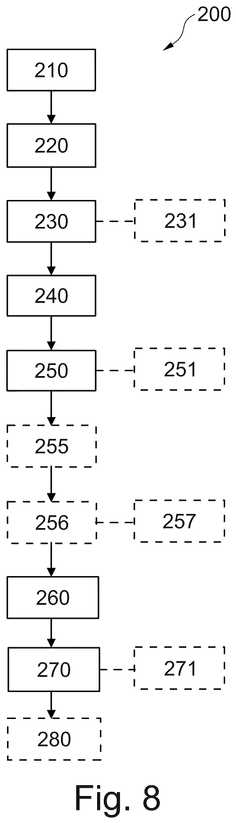

The disclosed method 200 (Fig. 8) will in the following be described with regard to a fuel cell structure 100, in particular an electrolyte-supported fuel cell structure 100 (Fig. 2), that is obtainable by the disclosed method 200. Figs. 1 to 8 show the fuel cell structure 100 (or parts of it) at different stages during the method 200 (Fig. 8). When referring to reference signs of the method (reference signs 200 and higher), these reference signs are shown in Fig. 8 as well as in Fig. 3 and 4 for some of the reference signs. The method steps are in part described concurrently with the resulting structures in the following.

The method 200 starts with providing a support layer 110 in method step 210 (Fig. 8).

Fig. 1 shows a tubular support layer 110 as an example for such a support layer 110, which is a continuous or coherent support layer 110, as described herein in detail further above, having a first (or outer) side 111 and a second (or inner) side 112. Although the present disclosure mainly focusses on tubular fuel cell structures 100, it should be appreciated, that in principle any other shapes, such as flat or gyroid structures, are conceivable, too. The manufactured fuel cell structure 100 may, in a non-limiting example, be a solid oxide fuel cell (SOFC).

The support layer 110 may, for example, comprise a corresponding ceramic or metallic material. The support layer 110 of Fig. 1 is a hollow tube 170 that is completely closed in a circumferential direction 194 of the tube 170 and that extends in a longitudinal direction 195. Fig. 1 also schematically illustrates a first fuel cell section 115, a second fuel cell section 116, a third fuel cell section 117 and a fourth fuel cell section 118, which later on correspond to individual fuel cells, that are connected in series. Also, Fig. 1 schematically illustrates ablation sections 119 with regard to the support layer 110, which illustrate areas along the longitudinal direction 195 of the support layer 110, at which the layers 120, 140, 160, 130 (see Fig. 2), that are later deposited step by step onto the support layer 110, are removed partially by laser ablation or any other suitable method as removed portions 124, 144, 164, 134 (not shown in Fig. 1, see, for example, Figs. 3 and 4) along the circumferential direction 194 of the tube 170, to build the individual fuel cell sections 115, 116, 117, 118 (see Fig. 2). These removed portions 124, 144, 164, 134 of the layers 120, 140, 160, 130 are herein also referred to as segmentation rings. It should be appreciated that the in Fig. 1 schematically illustrated sections 115, 116, 117, 118, and the ablation sections 119 are not visible on the pure support layer 110 in this stage of the method 200 but are only illustrated in Fig. 1 to clarify the next steps of the method 200. In this sense, the corresponding markings in Fig. 1 are rather to be understood as planning areas.

Fig. 2 shows a schematic cross sectional view of a fuel cell structure 100, as achievable by the disclosed method 200, along cut line A-A in Fig. 1, in a finished state. The fuel cell structure 100 comprises the support layer 110 in the form of the tube 170 shown in Fig. 1. A segmented first electrode layer 120, a segmented electrolyte layer 140, a segmented barrier layer 160 and a segmented second electrode layer 130 are coated onto the support layer 110 in this order along the circumferential direction 194 above one another. In particular, the first electrode layer 120 is the innermost layer, followed by the electrolyte layer 140, the barrier layer 160, and the second electrode layer. The first electrode layer 120, the electrolyte layer 140, the barrier layer 160, and the second electrode layer 130 in Fig. 2 have each been segmented to build individual fuel cell sections 115, 116, 117. In particular, the first electrode layer 120 comprises a first section 122, a second section 123, and a third section 125. The electrolyte layer 140 comprises a first section 142, a second section 143, and a third section 145. The barrier layer 160 comprises a first section 162, a second section 163, and a third section 165.

The second electrode layer 130 comprises a first section 132, a second section 133, and a third section 135. The first sections 122, 142, 162, 132 of the layers 120, 140, 160, 130 together build the first fuel cell section 115, the second sections 123, 143, 163, 133 of the layers 120, 140, 160, 130 together build the second fuel cell section 116, and the third sections 125, 145, 165, 135 of the layers 120, 140, 160, 130 together build the third fuel cell section 117. Each of the first, second and third fuel cell sections 115, 116, 117 is a fully functional fuel cell, as will become immediately apparent. In particular, the first electrode layer 120 comprises a first electrode material 121, which may be either of an anode material or a cathode material, while the second electrode layer comprises a second electrode material 131, which may be the other one of an anode material or a cathode material, as described herein further above. It should be appreciated that, although shown as having three fuel cell segments 115, 116, 117 in Fig. 2, the fuel cell structure 100 may have any number of such fuel cell segments 115, 116, 117.

An electrically conductive material 150 is arranged in a cavity between each of the fuel cell segments 115, 116, 117, such that it interconnects adjacent segments of the first electrode layer 120 and of the second electrolyte layer 130. In particular, the first segment 122 of the first electrode layer 120 is connected to the second section 133 of the second electrode layer 130 and the second section 123 of the first electrode layer 120 is connected to the third section 135 of the second electrode layer 130, such that the fuel cell segments 115, 116, 117 are connected in series. Further, the electrolyte layer 140 is shaped such that it further acts as an electrical insulation between the individual sections 122, 123, 125 of the first electrode layer 120 with regard to each other and as an electrical insulation between individual sections 132, 133, 135 of the section electrode layer 130 with regard to each other.

The support layer 110 further comprises porous regions 113 and solid regions 114, as described herein further above. The porous regions 113 are arranged under each of the fuel cell segments 115, 116, 117 to allow gas permeation from the inner side 112 of the tube 170 to the fuel cell segments 115, 116, 117. In particular, the inner side 112 of the tube acts as a gas channel 190, either for fuel or for an oxidizer, depending on whether the first electrode layer 120 is an anode layer or a cathode layer. The solid regions 114 provide stronger mechanical support.

It should be appreciated that, although Fig. 2 show the layer 120, 140, 160, 130 only below the tube 170, these layers are in reality present around the full circumference of the tube 170. The illustration in Fig. 2 has been chosen in this way to not obscure the figure with two much detail.

The method steps 210 to 280 of the method 200 (Fig. 8) for manufacturing the fuel cell structure 100 of Fig. 2 will now be described step by step with regard to Fig. 3 and 4, which show two alternative solutions of sequences of method steps by means of corresponding cross sections of the wall structure in each method step. Fig. 3 shows only two fuel cells, for example the first two fuel cell segments 115, 116 of Fig. 2. However, it should be appreciated that any number of adjacent fuel cell segments may be created on the support layer 110 in the same manner.

Fig. 3 shows on the left side (first picture from the left) providing the support layer 110 in step 210. The support layer 110 comprises the porous regions 113 and the solid regions 114, as described.

The second picture from the left in Fig. 3 shows method steps 220 (depositing the first electrode layer 120) and 230 (removing portions/segmentations rings 124 of the first electrode layer 120). The picture shows the wall structure after step 230 has concluded. In step 220, a continuous first electrode layer 120 is deposited onto the support layer 110 (not explicitly shown), for example by slurry dip coating, spray coating, physical vapor deposition (PVD), or any other suitable process, as described herein further above in detail. In particular, a first electrode material 121, which may be either an anode material or a cathode material, is coated onto the support layer as a continuous layer, such that it at least covers the areas of the support layer 110 that are to become the individual fuel cell segments such as the fuel cell segments 115, 116, 117 of Fig. 2. If a sintering of the first electrode layer 120 is necessary, the next method step 230 may either occur before or after sintering of the first electrode layer 120. In removal step 230, portions 124 of the first electrode layer 120 are removed, such that at least two individual sections 122, 123 of the first electrode layer 120 remain on the support layer 110 (in particular on the first (or outer, in tubular designs) side 111 of the support layer 110. The individual sections 122, 123 are neighboring each other side-by-side on the support layer 110, i.e., are adjacent to each other in-plane. It is to be appreciated that "plane" as used herein, does not necessarily mean a flat plane, but rather a surface, flat or curved (for example in tubular designs) or otherwise shaped, devoid of any significant steps in the surface. The individual sections 122, 123 do not touch each other at any point. In particular, the removed portions 124 are lines running into drawing plane of Fig. 3, for example segmentations rings 124 that run along a circumferential direction of a tube 170 (see Figs. 1 and 2) in such designs. Removing 230 of the portions 124 may occur in any suitable way, preferably, it is done by means of a laser ablation process, as described herein further above, by scanning the corresponding portions with a laser beam.

The third picture from the left of Fig. 3 shows method steps 240 (depositing the electrolyte layer 140) and 250 (removing portions/segmentations rings 124 of the first electrode layer 120). The picture shows the wall structure after step 240 has concluded. In step 240, a continuous electrolyte layer 140 is deposited onto the segmented first electrode layer 120 resulting after step 230 of the method 200. This may be done similarly to depositing the first electrode layer 120. In particular, an electrolyte material 141 is coated above the first electrode layer 120 as a continuous layer, such that it at least covers the areas coated with the individual sections 122, 123 of the first electrode layer and the removed portions 124 of the first electrode layer 120. In removal step 250, portions 144 of the electrolyte layer 140 are removed, such that at least two individual sections 142, 143 of the electrolyte layer 140 remain on the individual sections 122, 123 of the first electrode layer 120, and optionally, as depicted, partially within the segmentation rings 124 to act as an insulation between the individual sections 122, 123 of the first electrode layer 120. However, one of the sides of each of these individual sections 122, 123 needs to remain free of the electrolyte material 141 to allow electrical interconnection later on in the method 200. The individual sections 142, 143 are again neighboring each other side-by-side on the first electrode layer 120, i.e., are adjacent to each other in-plane, such that they substantially cover the individual sections 122, 123 of the first electrode layer 120. Removing 250 the portions 144 of the electrolyte layer may occur similarly to removing 230 the portions 124 of the first electrode layer 120, in particular in segmentations rings, for example, preferably by laser ablation.

The fourth picture from the left of Fig. 3 shows method steps 255 (depositing the barrier layer 160), 256 (removing portions/segmentations rings 164 of the barrier layer 160), 260 (depositing the second electrode layer 130), and 270 (removing portions/segmentations rings 164 of the second electrode layer 130). The picture shows the wall structure after step 270 has concluded. **In** step 255, a barrier layer 160 is deposited onto the segmented electrolyte layer 140 resulting after step 250 of the method 200. This may be done similarly to depositing the electrolyte layer 140. **In** particular, a barrier layer material (no reference sign to not obscure the figure) is coated above the electrolyte layer 140 as a continuous layer, such that it at least covers the areas coated with the individual sections 122, 123 of the first electrode layer and the removed portions 124, 144 of the first electrode layer 120 and the electrolyte layer 140. **In** removal step 156, portions 164 of the barrier layer 160 are removed, such that at least two individual sections 162, 163 of the barrier layer 160 remain on the individual sections 142, 143 of the electrolyte layer 140. The individual sections 162, 163 are again neighboring each other side-by-side on the electrolyte layer 140, i.e., are adjacent to each other in-plane, such that they substantially cover the individual sections 142, 143 of the electrolyte layer 140. Removing 256 the portions 164 of the electrolyte layer may occur similarly to removing 230, 250 the portions 124, 144 of the previous layers 120, 140, in particular in segmentations rings, for example, preferably by laser ablation. **In** the same way, in step 260, the second electrode layer 130 (which is a cathode layer, if the first electrode layer 120 is an anode layer, and which is an anode layer, if the first electrode layer 120 is a cathode layer) is deposited/coated onto the barrier layer 160 and segmented in individual sections 132, 133 by removing portions 134 of the second electrode layer 130, preferably by laser ablation. The removed portions 134 also build segmentations rings 134, as described with regard to the previous layers 120, 140, 160. The individual sections 132, 133 are at least substantially covering the same areas as the individual sections 162, 163 of the barrier layer 160. It should be noted that depositing 255 the barrier layer 160 and depositing 260 the second electrode layer 130 may optionally also occur in one step, and that removing 256 the portions 164 of the barrier layer 160 and the portions 134 of the second electrode layer 130 may occur in one step, as well. Further, it may be conceivable to not have a barrier layer 160 or to have the barrier layer 160 between the first electrode layer 120 and the electrolyte layer 140.

The fifth picture from the left of Fig. 3 shows method steps 280 (depositing the electrically conductive material 150). The picture shows the wall structure after step 280 has concluded. In particular, the removed portions 124, 144, 164, and 134 of the first electrode layer 120, the electrolyte layer 140, the barrier layer 160, and the second electrode layer 130 together build a cavity between the individual fuel cell sections, that itself has the shape of a segmentation ring, because the materials of the layers 120, 140, 160, and 130 have been removed at least partially coinciding. This cavity can be used to interconnect the individual fuel cell sections with each other in series. In particular, as shown, the electrically conductive material 150 in Fig. 3 connects the first section 122 of the first electrode layer 120 with the adjacent second section 133 of the second electrode layer 130, which corresponds to a serial connection between the corresponding fuel cell sections 115, 116. The electrically conductive material 150 may be deposited in the cavity, such that it contacts these sections 122, 133 at least at one location along the segmentation ring. It is not necessary to have the electrically conductive material along the whole circumference of a tube 170, for example, although this is possible, too. The electrically conductive material 150 can, for example, be deposited by galvanic deposition or physical vapor deposition (PVD) or any other suitable process, as already described herein further above. Further, a masking may be applied (that is later removed) before depositing the electrically conductive material 150, in order to achieve the desired shape of the electrically conductive material 150, as depicted. As illustrated, the electrically conductive material 150 is isolated from the second section 123 of the first electrode layer 120 by a part of the electrolyte layer 140 that has not been removed within the removed portion 144 of the electrolyte layer 140. Further, an air gap is provided between the first section 132 of the second electrode layer 130 and the electrically conductive material 150 to provide isolation of the first and second sections 132, 133 of the second electrode layer 130 to each other. Optionally, the remaining space with the cavity build by portions 124, 144, 164, 134 can be filled with an electrically insulating material, such as glass sealant to increase gas tightness.

Fig. 4 shows an alternative sequence of the steps of the method 200. Overlapping features with regard to Fig. 4 will not be discussed here, again. Until method step 250 (removing portions of the electrolyte layer 140), this alternative is exactly the same as described with regard to Fig. 3. However, depositing the electrically conductive material 150 in step 280 occurs before depositing the second electrode layer 130 in step 260. This in particular allows to have some part of the electrically conductive material sandwiched between the corresponding sections 163, 133 of the barrier layer 160 and the second electrode layer 130, which could increase the strength of the electrical connection. Apart from that, the method steps are carried out in the same way as described with regard to Fig. 3. The corresponding discussion of the steps therefore is not repeated. Rather, it is referred to the discussion of Fig. 3.

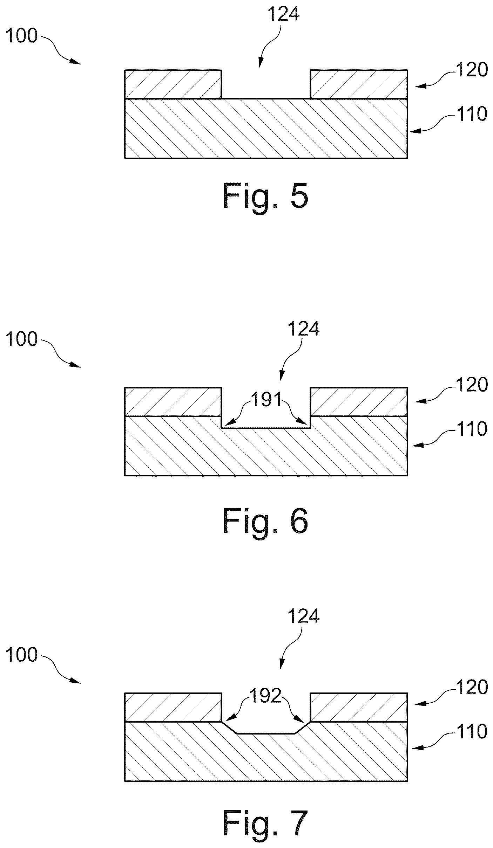

Figs. 5 to 7 show a problem that may arise when removing the portions 124, 144, 164, 134 of the layers 120, 140, 160, 130 by laser ablation in steps 230, 250, 256, 270 of the method 200 and a possible solution. Figs. 5 to 7 exemplary focus on the removal step 230 for the portions 124 of the first electrode layer 120 that is deposited onto the support layer 110. However, it should be noted that the corresponding discussion is equally valid for the removal of the portions 144, 164, 134 of the remaining layers 140, 160, 130.

Fig. 5 shows the ideal situation, in which the laser ablation of the portion 124 / segmentation ring 124 of the first electrode layer 120 is stopped at exactly the right time, such that the portion 124 of the first electrode layer 120 is fully removed while the support layer 110 stays fully intact.

However, in reality, such exact timing of the laser ablation process is difficult and there is at least some ablation of the support layer 110, too. This situation is shown in Fig. 6. Since the laser ablation usually occurs perpendicular (or at least substantially perpendicular), if some of the support layer 110 is removed, too, this may lead to sharp edges 191 which are mechanical weak points that decrease the mechanical stability of the support layer 110.

Fig. 7 shows a possible solution for the problem of Fig. 6. The problems arising from the sharp edges 191 of Fig. 7 may be avoided by softening these edges by appropriately controlling the laser. A laser used for laser ablation usually comprises a considerably smaller diameter than the width of the portion 124 / segmentation ring 124. The sharp edges 191 of Fig. 6 can then be avoided, for example, by using a "wobbling" laser beam and illuminating the edges with the laser beam for a shorter period of time than the center sections of the segmentation rings 124. This leads to deeper removal of material in the center sections than at the edges, thereby creating a more continuous transition at the edges, which results in softened edges 192. This reduces the risk of potential weak points that decrease mechanical stability. The laser may, during a first time interval in which the outer layers (meaning layers further above the support layer 110) are removed, uniformly illuminate the whole width of the segmentation rings 124. In a second time interval when reaching the end of the laser ablation process of the corresponding segmentation ring 124 (i.e., when coming closer to the support layer 110), illumination may be transitioned to the scheme described above, i.e., illuminating the edges with the wobbling laser for shorter time periods.

Fig. 8 show a flow chart of the method 200 for manufacturing the fuel cell structure 100. This method has already been described in detail with regard to Figs. 3 and 4. Therefore, in the following, the corresponding method steps will only be described very briefly. For more detail of the individual steps, it is referred in particular to the discussion of Figs. 3 and 4. The following description also still refers to Figs. 1 to 7.

The method 200 starts with providing 210 a continuous support layer 110, such as the one shown in Fig. 1.

The method 200 then proceeds with depositing a first electrode layer 120 comprising a first electrode material 121 onto the first side 111 of the continuous support layer 110 in step 220.

The first electrode layer 120, after step 220, is a continuous layer. The method 200 then proceeds with removing portions 124 of the first electrode layer 120 in step 230, such that at least two individual sections 122, 123 (see Figs. 3 and 4) of the first electrode layer 120 remain on the first side 111 of the support layer 110, and such that these individual sections 122, 123 are neighboring each other side-by-side on the support layer 110. The removing in step 230 may preferably occur by laser ablation and may be accompanied by concurrently monitoring emission spectra for end point detection of the laser ablation, as described herein further above in detail, in step 231. However, step 231 is optional. Laser ablation may, for example, also be time controlled or the end point may be detected in any other suitable way.

The method 200 then proceeds with depositing a continuous electrolyte layer 140 comprising an electrolyte material 141 above the first electrode layer 120, as described with regard to Fig. 3, and, in step 250, with removing portions 144 (in particular segmentation rings) of the electrolyte layer 140 that are at least partially coincident with the portions 124 removed from the first electrode layer 120, such that each one of individual sections 142, 143, as shown in Figs. 3 and 4, of the electrolyte layer 140 at least substantially covers one of the individual sections 122, 123 of the first electrode layer 120). The removing in step 250 may preferably occur by laser ablation and may be accompanied by concurrently monitoring emission spectra for end point detection of the laser ablation, as described herein further above in detail, in step 251. However, step 251 is optional. Laser ablation may, for example, also be time controlled or the end point may be detected in any other suitable way.

The method 200 then comprises depositing a second electrode layer 130 comprising a second electrode material 131 onto the electrolyte layer 140 in step 260, wherein the second electrode layer 130 also after depositing is a continuous layer. Method 200 then comprises, in step 270, removing portions 134 of the second electrode layer 130 that are at least partially coincident with the portions 124, 144 removed from the first electrode layer 120 and the electrolyte layer 140, such that each one of individual sections 132, 133 of the second electrode layer 130 covers one of the individual section 142, 143 of the electrolyte layer 140, as depicted in Figs. 3 and 4. The removing in step 270 may preferably occur by laser ablation and may be accompanied by concurrently monitoring emission spectra for end point detection of the laser ablation, as described herein further above in detail, in step 271. However, step 271 is optional. Laser ablation may, for example, also be time controlled or the end point may be detected in any other suitable way.

Optionally, the method 200 may comprise steps 255 and 256, that may comprise depositing a barrier layer 160 and removing portions 164 of the barrier layer 160, as described with regard to Fig. 3. The removing in step 256 may preferably also occur by laser ablation and may be accompanied by concurrently monitoring emission spectra for end point detection of the laser ablation, as described herein further above in detail, in step 257. However, step 257 is optional. Laser ablation may, for example, also be time controlled or the end point may be detected in any other suitable way.

Finally, method 200 concludes with depositing an electrically conductive material 150 at least partially within at least one cavity created by removing (in steps 230, 250, 270) the portions 124, 134, 144 of the first electrode layer 120, the electrolyte layer 140, and the second electrode layer 130, such that one of the individual sections 122, 123 of the first electrode layer 120 is electrically interconnected with an adjacent one of the individual sections 132, 133 of the second electrode layer 130 via the electrically conductive material 150.

Depositing 280 the electrically conductive material 150 may, for example, be done by galvanic deposition, physical vapor deposition (PVD), or in any other suitable way. For example, printing of conductive inks or pastes, e.g, by aerosol jet or inkjet printing, may be utilized alternatively. This can ensure that a section 122 of the first electrode layer 120 is contacted and the conductive track can be continued towards an adjacent section 133 of the second electrode layer 130 without creating a short circuit between the neighboring sections 132, 133 of the second electrode layer 130. If required, a remainder of the segmentation rings can be filled with electrically insulating material, such as glass.

For the fuel cell structure 100 obtained by the method 200 described herein, most of the outer side/surface 111 of the tube 170 is to be covered by the electrodes (i.e., the sections of electrode layers 120, 130 (e.g., 122, 123, 132, 133) and only small parts (the segmentation rings) are without the electrode materials. Therefore, the proposed subtractive process of laser ablation can be very suitable. However, for the electrical interconnection, the opposite situation holds: Only a very small part of the tube surface (or in general surface of the fuel cell structure 100) needs to be covered by the conductive material 150. Therefore, for the conductive material 150 providing the serial interconnection, an additive approach can be even better than the processes described above. A further alternative for arranging the conductive material 150 therefore may be printing the electrical interconnections using a 3D printing system such as aerosol jet or inkjet printing or paste dispensing, as indicated above. These methods can also be applied on tubes 170.

Although herein mainly described for tubular structures, the method described herein for segmentation and electrical interconnections can not only be applied to tubes 170 but more general to gyroid structures. This has the advantage that not a large number of tubes need to be assembled to build a high power fuel cell system. Instead, only a few complex gyroid structures can be sufficient.

In tubular configurations, there are exactly two electrical contacts for current collection on the outer tube wall. Therefore, each tube end can be provided with one metallic ring on the outer side so that both electrodes can easily be contacted from the outside. Because all layers 120, 140, 160, 130 are provided on the outer tube surface, segmentation word on the inner side of a tube 170, which can be difficult because of the small dimensions, can be avoided.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: fuel cell structure
- 110: support layer
- 111: first side of support layer, outer side of tube
- 112: second side of support layer, inner side of tube
- 113: porous regions
- 114: solid regions
- 115: first fuel cell section
- 116: second fuel cell section
- 117: third fuel cell section
- 118: fourth fuel cell section
- 119: ablation section
- 120: first electrode layer
- 121: first electrode material
- 122: first section of first electrode layer
- 123: second section of first electrode layer
- 124: removed portions (of first electrode layer), segmentation rings
- 125: third section of first electrode layer
- 130: second electrode layer
- 131: second electrode material
- 132: first section of second electrode layer
- 133: second section of second electrode layer
- 134: removed portions (of second electrode layer), segmentation rings
- 135: third section of second electrode layer
- 140: electrolyte layer
- 141: electrolyte material
- 142: first section of electrolyte layer
- 143: second section of electrolyte layer
- 144: removed portions (of electrolyte layer), segmentation rings
- 145: third section of electrolyte layer
- 150: electrically conductive material
- 160: barrier layer
- 162: first section of barrier layer
- 163: second section of barrier layer
- 164: removed portions of barrier layer, segmentation rings
- 165: third section of barrier layer
- 170: tube
- 171: circumferential direction of tube
- 172: longitudinal direction of tube
- 180: laser beam
- 190: gas channel
- 191: sharp edges
- 192: softened edges
- 194: circumferential direction
- 195: longitudinal direction
- A-A: cut line
- 200: method
- 210: providing continuous support layer
- 220: depositing first electrode layer
- 230: removing portions of first electrode layer
- 231: monitoring emission spectrum
- 240: depositing electrolyte layer
- 250: removing portions of electrolyte layer
- 251: monitoring emission spectrum
- 255: depositing barrier layer
- 256: removing portions of barrier layer
- 257: monitoring emission spectrum
- 260: deposition second electrode layer
- 270: removing portions of second electrode layer
- 271: monitoring emission spectrum
- 280: depositing electrically conductive material

## Claims

1. Method (200) for manufacturing a fuel cell structure (100), the method (200) comprising:
providing (210) a support layer (110) having a first side (111) and a second side (112);
depositing (220) a first electrode layer (120) comprising a first electrode material (121) onto the first side (111) of the continuous support layer (110), wherein the first electrode layer (120) is a continuous layer;
removing (230) portions (124) of the first electrode layer (120), such that at least two individual sections (122, 123) of the first electrode layer (120) remain on the first side (111) of the support layer (110), and such that the individual sections (122, 123) are neighboring each other side-by-side on the support layer (110);
depositing (240) a continuous electrolyte layer (140) comprising an electrolyte material (141) above the first electrode layer (120);
removing (250) portions (144) of the electrolyte layer (140) that are at least partially coincident with the portions (124) removed from the first electrode layer (120), such that each one of individual sections (142, 143) of the electrolyte layer (140) covers one of the individual sections (122, 123) of the first electrode layer (120);
depositing (260) a second electrode layer (130) comprising a second electrode material (131) onto the electrolyte layer (140), wherein the second electrode layer (130) is a continuous layer;
removing (270) portions (134) of the second electrode layer (130) that are at least partially coincident with the portions (124, 144) removed from the first electrode layer (120) and the electrolyte layer (140), such that each one of individual sections (132, 133) of the second electrode layer (130) covers one of the individual section (142, 143) of the electrolyte layer (140); and
depositing (280) an electrically conductive material (150) at least partially within at least one cavity created by removing (230, 250, 270) the portions (124, 134, 144) of the first electrode layer (120), the electrolyte layer (140), and the second electrode layer (130), such that one of the individual sections (122, 123) of the first electrode layer (120) is electrically interconnected with an adjacent one of the individual sections (132, 133) of the second electrode layer (130) via the electrically conductive material (150).

2. The method of claim 1, further comprising depositing (255) a barrier layer (160) between the electrolyte layer (140) and at least one of the first electrode layer (120) and the second electrode layer (130); and
removing (256) portions (164) of the barrier layer (160) that are at least partially coincident with the portions (124, 144, 134) removed from the first electrode layer (120), the electrolyte layer (140), and the second electrode layer (130).

3. The method (200) of claim 1 or 2, wherein providing the continuous support layer (110) comprises providing the continuous support layer (110) in a tubular shape building a tube (170) having an outer side (111) and an inner side (112), wherein the first side (111) of the continuous support layer (110) is the outer side (111) of the tube (170) and wherein the second side (112) of the continuous support layer (110) is the inner side (112) of the tube.

4. The method (200) of claim 3, wherein removing (230, 250, 270) the corresponding portions (124, 144, 134) of the first electrode layer (120), the electrolyte layer (140), and the second electrode layer (130) each occurs in at least one segmentation ring (124, 144, 134) around a circumferential direction (171) of the tube (170), such that the segmentation rings (124, 144, 134) are each at least partially coinciding with each other in their position along a longitudinal direction of the tube (170).

5. The method (200) of any one of the preceding claims, wherein the continuous support layer (110) is at least partially porous, such that it is permeable for a fuel or an oxidizer supplied to the fuel cell structure (100), depending on the configuration of the first and second electrode layers (120, 130).

6. The method (200) of claim 5, wherein the support layer (110) comprises a ceramic or metallic material; and
wherein the support layer (110) is porous at least in regions (113) below the first electrode layer (120), such that the fuel or the oxidizer can permeate the support layer (110) from the second side (112) to the first side (111) of the support layer (110).

7. The method (200) of any one of the preceding claims, wherein removing (230, 250, 270) the corresponding portions (124, 144, 134) of the first electrode layer (120), the electrolyte layer (140) and the second electrode layer (130) is done by a laser ablation process.

8. The method (200) of any claim 7, wherein each laser ablation process is stopped as soon as the support layer (110) is exposed, in order to at least largely avoid removal of material of the support layer (110).

9. The method (200) of claim 7, wherein each laser ablation process is performed for a predetermined period of time.

10. The method (200) of claim 7, wherein the support layer (110) with regard to the corresponding one of the first electrode layer (120), the electrolyte layer (140), and the second electrode layer (130) exhibits a distinct emission spectrum; and
wherein removing (230, 250, 270) of the portions (124, 144, 134) of at least one of the first electrode layer (120), the electrolyte layer (140) and the second electrode layer (130), respectively, further comprises monitoring (231, 251, 271) the corresponding emission spectrum during the corresponding laser ablation process and stopping the corresponding laser ablation process when a change in the detected emission spectrum indicates the corresponding laser ablation process has reached the support layer (110) and therefore is complete.

11. The method (200) of any one claims 7 to 10, wherein removing (230, 250, 270) the portions (124, 144, 134) of the first electrode layer (120), the electrolyte layer (140), and the second electrode layer (130) by laser ablation is performed by scanning corresponding regions of the respective one of the first electrode layer (120), the electrolyte layer (140), and the second electrode layer (130) with a laser beam (180).

12. The method (200) of any one of claims 7 to 11, wherein the laser ablation processes are adjusted so as to soften edges at the end of each of the laser ablation processes, in order to avoid or at least reduce mechanical stress in the support layer (110).

13. The method (200) of any one of the preceding claims, wherein depositing (280) the electrically conductive material (150) is done by a galvanic process and/or a physical vapor deposition process, PVD process.

14. The method (200) of any one of the preceding claims, wherein coinciding ones of the individual sections (122, 123, 142, 143, 132, 133) of the first electrode layer (120), the electrolyte layer (140), and the second electrode layer (130) each together build an individual fuel cell; and
wherein each individual fuel cell is interconnected in series with an adjacent one of the individual fuel cells by the electrically conductive material (150).

15. The method (200) of any one of the preceding claim, wherein depositing (220, 240, 260) the first electrode layer (120), the electrolyte layer (140), and the second electrode layer (130) is carried out by slurry dip coating or a spray coating process.
